(19) Europäisches Patentamt European Patent Office Office européen des brevets

(11) **EP 4 538 653 A1**

(12) **EUROPEAN PATENT APPLICATION**
published in accordance with Art. 153(4) EPC

(43) Date of publication:
**16.04.2025 Bulletin 2025/16**

(51) International Patent Classification (IPC):
*G01F 1/66* (2022.01)    *G01N 29/024* (2006.01)
*G01N 29/32* (2006.01)

(21) Application number: **23819854.3**

(22) Date of filing: **06.06.2023**

(52) Cooperative Patent Classification (CPC):
**G01F 1/66; G01N 29/024; G01N 29/32**

(86) International application number:
**PCT/JP2023/021057**

(87) International publication number:
**WO 2023/238874 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.06.2022 JP 2022092655**

(71) Applicant: **Panasonic Intellectual Property Management Co., Ltd.**
**Kadoma-shi, Osaka 571-0057 (JP)**

(72) Inventors:
• **KONISHI, Ryohei**
**Kadoma-shi, Osaka 571-0057 (JP)**
• **MIYOSHI, Asako**
**Kadoma-shi, Osaka 571-0057 (JP)**
• **NAKABAYASHI, Yuuji**
**Kadoma-shi, Osaka 571-0057 (JP)**
• **SATOU, Masato**
**Kadoma-shi, Osaka 571-0057 (JP)**
• **MATSUDA, Masataka**
**Kadoma-shi, Osaka 571-0057 (JP)**
• **TAKAKURA, Yuya**
**Kadoma-shi, Osaka 571-0057 (JP)**

(74) Representative: **SSM Sandmair**
**Patentanwälte Rechtsanwalt**
**Partnerschaft mbB**
**Joseph-Wild-Straße 20**
**81829 München (DE)**

(54) **PHYSICAL QUANTITY MEASUREMENT DEVICE**

(57) An object of the present disclosure is to provide a physical quantity measuring device which enables, even in a high-humidity environment where water drops are contained in a fluid under measurement, measuring the flow rate of a gas or the concentration of components of the gas with good stability. A physical quantity measuring device (22) includes a flow channel body (11), a flow rate measuring unit, an upstream opening (17), a downstream opening (18), and a sub-flow channel (13). The flow channel body (11) includes a main flow channel (9). The flow rate measuring unit is disposed in the main flow channel (9). The upstream opening (17) is disposed in upstream of the main flow channel (9). The downstream opening (18) is disposed in downstream of the main flow channel (9). The sub-flow channel (13) is disposed in outside the main flow channel (9) to connect the upstream opening (17) and the downstream opening (18) to each other. The sub-flow channel (13) has a constriction portion (27) that reduces a cross-sectional area of the flow channel.

FIG. 5A

EP 4 538 653 A1

# FIG. 5B

## Description

## Technical Field

The present disclosure relates to a physical quantity measuring device for measuring either the flow rate of a gas or the concentration of a component included in a gas without the influence of water drops on the fluid containing water.

## Background Art

Patent Literature 1 discloses a physical quantity measuring device for measuring either the flow rate of a fluid or the concentration of a component included in the fluid without the influence of water drops on the fluid containing water. In this measuring device, the fluid under measurement is divided into a flow diverted to a main flow channel on which the physical quantity is supposed to be measured and a flow diverted to a sub-flow channel which is provided as a bypass channel for the main flow channel and on which no physical quantity is supposed to be measured, and then the two flows of the fluid are confluent again at a downstream point. In this case, the water drops contained in the fluid under measurement flow by way of the sub-flow channel.

## Citation List

## Patent Literature

Patent Literature 1: JP 2022-25751 A

## Summary of Invention

An object of the present disclosure is to provide a physical quantity measuring device which enables, even if condensed dews are included in a fluid (such as a gas) flowing in, not only measuring either the flow rate or concentration of the gas accurately in a high-humidity environment but also ensuring a path for the condensed dews as well.

A physical quantity measuring device according to the present disclosure includes a flow channel body, a flow rate measuring unit, a signal processing unit, an upstream opening, a downstream opening, and a sub-flow channel. The flow channel body includes a main flow channel. The flow rate measuring unit is provided for the main flow channel. The signal processing unit receives a signal from the flow rate measuring unit to measure a flow rate of a fluid. The upstream opening is provided upstream of the main flow channel. The downstream opening is provided downstream of the main flow channel. The sub-flow channel is provided outside the main flow channel to connect the upstream opening and the downstream opening to each other. The sub-flow channel has a constriction portion that reduces a cross-sectional area of the flow channel.

## Brief Description of Drawings

FIG. 1 illustrates a configuration for a flow rate measuring device as well as a perspective view illustrating the appearance of a flow channel part according to a first embodiment;
FIG. 2 is an exploded diagram of the flow channel part according to the first embodiment shown in FIG. 1;
FIG. 3 is an exploded diagram illustrating a partial cross section of the flow channel part according to the first embodiment shown in FIG. 1;
FIG. 4A is a schematic cross-sectional view of the flow channel part according to the first embodiment taken along a plane A1-A2 shown in FIG. 1;
FIG. 4B is an exploded diagram of the flow channel part shown in FIG. 1;
FIG. 5A is a cross-sectional view of the flow channel part according to the first embodiment taken along a plane B1-B2 shown in FIG. 1;
FIG. 5B is a schematic cross-sectional view taken along a plane C1-C2 shown in FIG. 5A;
FIG. 6 is an enlarged plan view of a constriction portion shown in portion G of FIG. 5A illustrating a cross section according to the first embodiment taken along the plane A1-A2 shown in FIG. 4;
FIG. 7 is a schematic cross-sectional view of the constriction portion according to the first embodiment taken along a plane D1-D2 shown in FIG. 6;
FIG. 8 illustrates a flow operation of the constriction portion according to the first embodiment;
FIG. 9 is a graph showing a flow resistance curve of a fluid under measurement on a flow channel and a flow resistance curve of the fluid under measurement on a main flow channel according to the first embodiment; and
FIG. 10 is a partial cross-sectional view of a flow channel part of a known physical quantity measuring device.

## Description of Embodiments

(Knowledge that forms basis of the present disclosure)

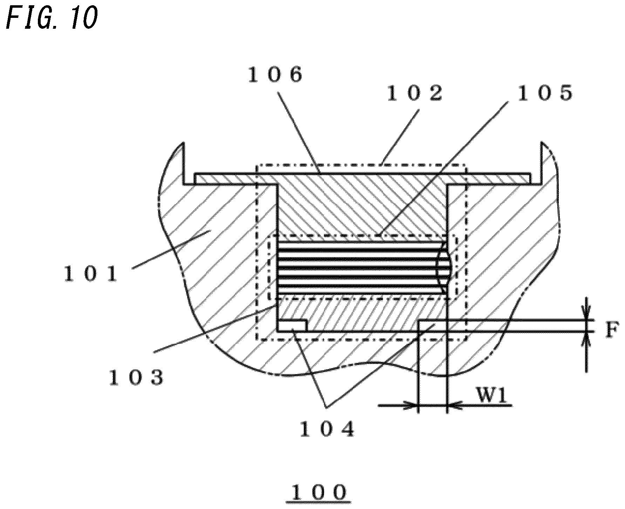

When the present inventors conceived the concept of the present disclosure, a physical quantity measuring device 100 such as the one shown in FIG. 10 was available as a device of forming a sub-flow channel for removing water drops from the fluid under measurement for the purpose of measuring a physical quantity such as the flow rate of a gas containing water. FIG. 10 is a partial cross-sectional view of a flow channel part of such a physical quantity measuring device 100. According to this configuration, the fluid under measurement is divided into a flow running toward a main flow channel 105 on which the physical quantity is supposed to be measured and a flow running toward a sub-flow channel 104 which is provided as a bypass channel for the main flow channel and on which no physical quantity is supposed to be measured, and then the two flows of the fluid are confluent again at a downstream point. In this case, the water drops contained in the fluid under measurement flow away by way of the sub-flow channel 104.

The sub-flow channel 104 thus formed has dimensions including a width W1 and a height F. These dimensions were generally regarded as sufficient values for required water drops to stagnate or flow.

However, the inventors discovered that there is a challenge in that such a method, which bypasses through the sub-flow channel 104, leads to significant changes in the flow rate (resistance changes) of the fluid under measurement due to the presence or absence of water drops, resulting in errors in measurement accuracy. The present inventors conceived the subject-matter of the present disclosure that would overcome such a problem.

Thus, a physical quantity measuring device according to the present disclosure includes a flow channel body, a flow rate measuring unit, a signal processing unit, an upstream opening, a downstream opening, and a sub-flow channel. The flow channel body includes a main flow channel. The flow rate measuring unit is provided for the main flow channel. The signal processing unit receives a signal from the flow rate measuring unit to measure a flow rate of a fluid. The upstream opening is provided upstream of the main flow channel. The downstream opening is provided downstream of the main flow channel. The sub-flow channel is provided outside the main flow channel to connect the upstream opening and the downstream opening to each other. The sub-flow channel has a constriction portion, of which a channel cross section is narrowed, along the sub-flow channel. This enables reducing the change in the flow rate (i.e., change in resistance) of the fluid passing through the sub-flow channel depending on whether any water drops are contained in the sub-flow channel or not, thus contributing to reducing the measurement error. As used herein, the phrase "outside the main flow channel" where the sub-flow channel is provided also refers to a space other than the space where the main flow channel is formed.

Embodiments of the present disclosure will now be described in detail with reference to the accompanying drawings. Note that unnecessarily detailed description will be omitted. For example, detailed description of already well-known matters and redundant description of substantially the same configuration will be omitted.

It should also be noted that the accompanying drawings and the following description are provided by the applicant to help one of ordinary skill in the art understand the present disclosure fully and should not be construed as limiting the scope of the present disclosure, which is defined by the appended claims.

(First embodiment)

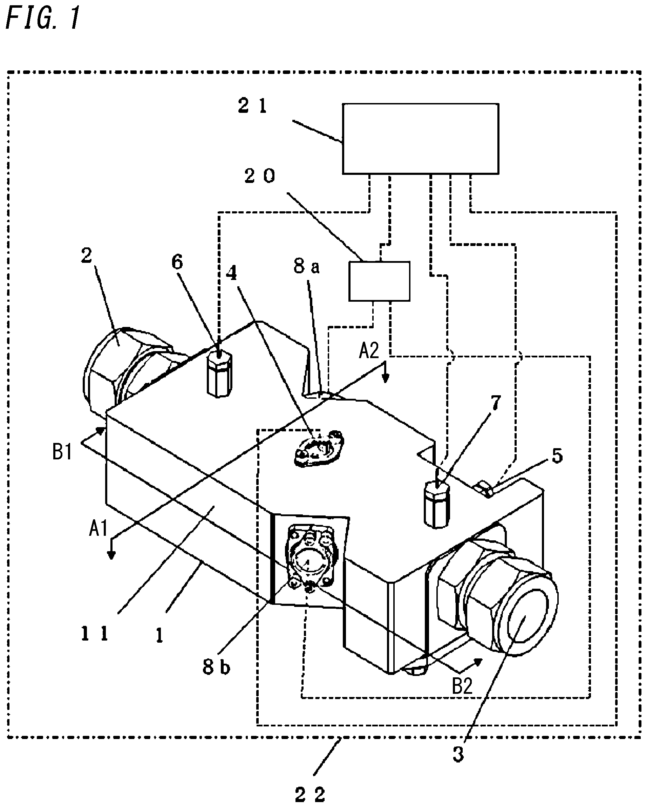

A first embodiment will now be described with reference to FIGS. 1-9.

[1-1. Configuration]

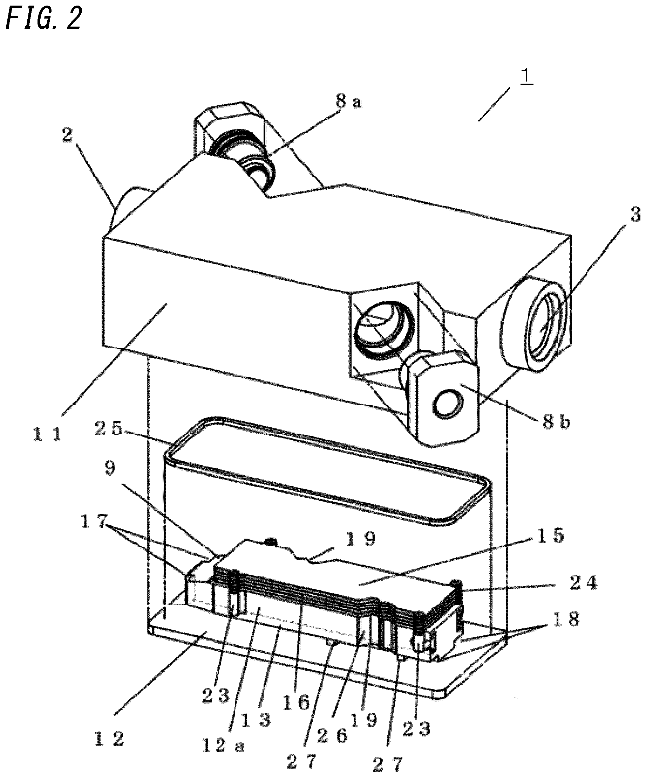

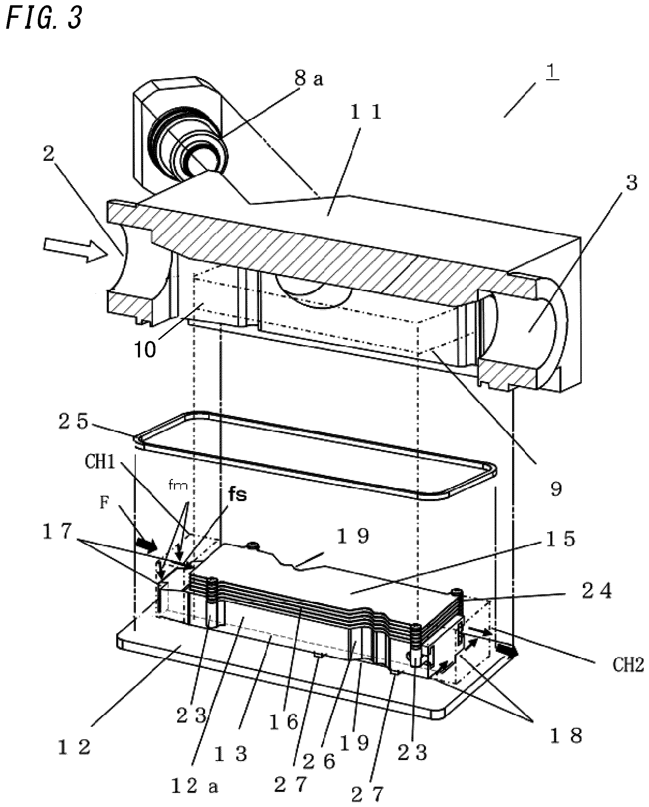

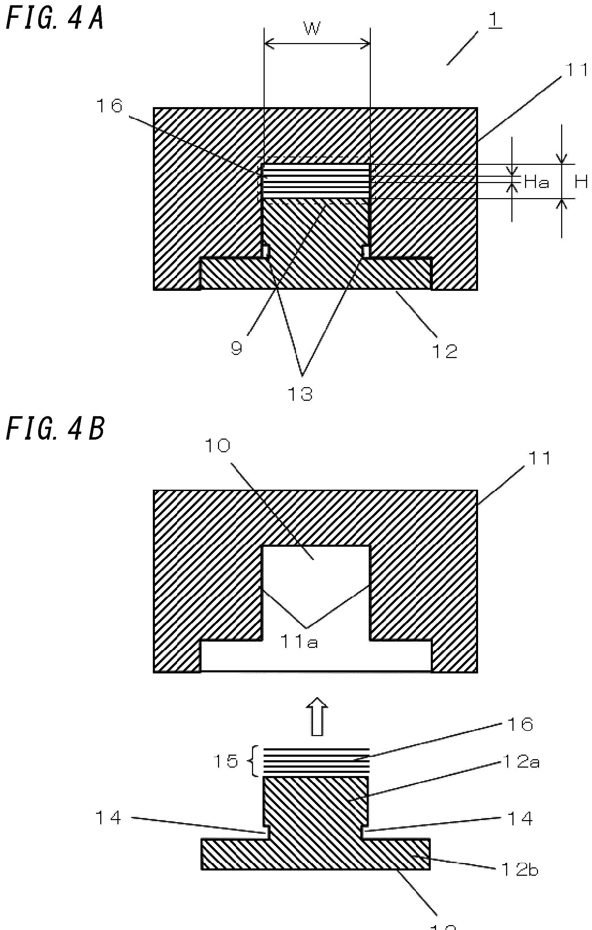

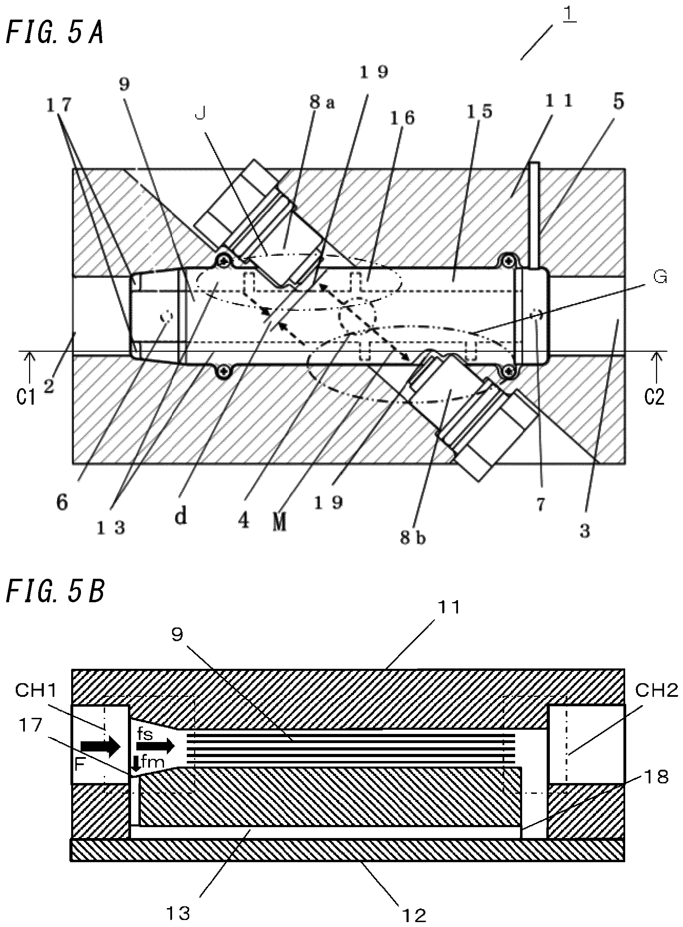

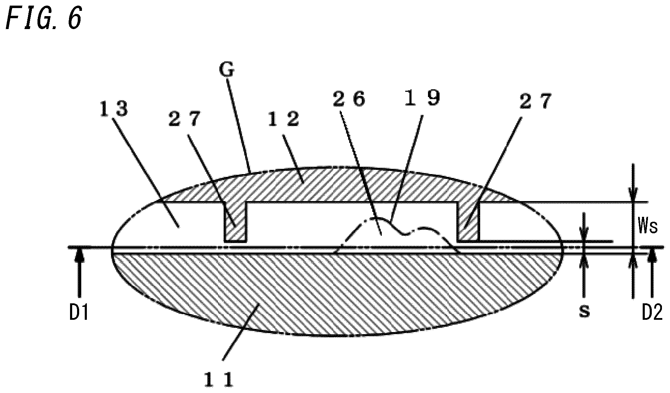

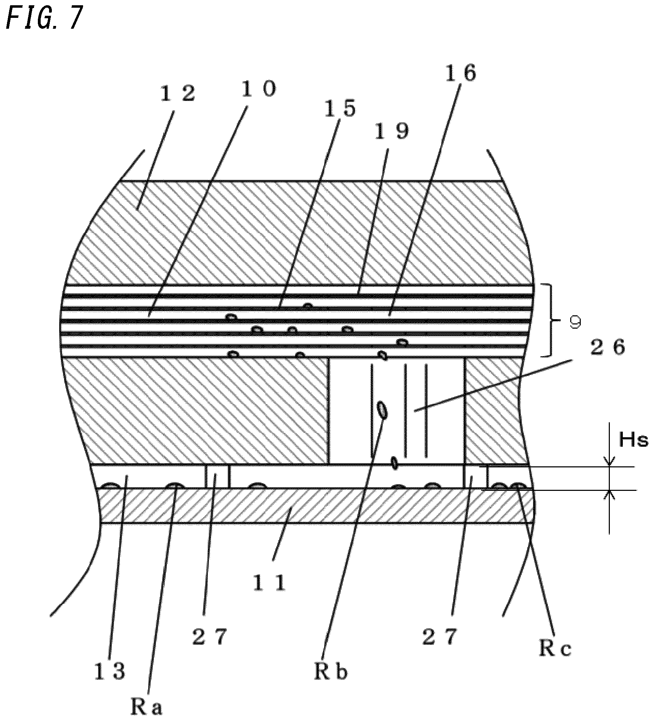

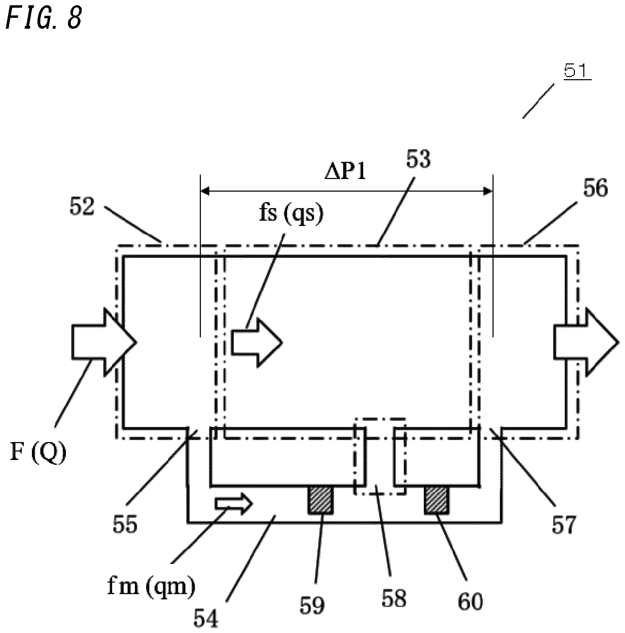

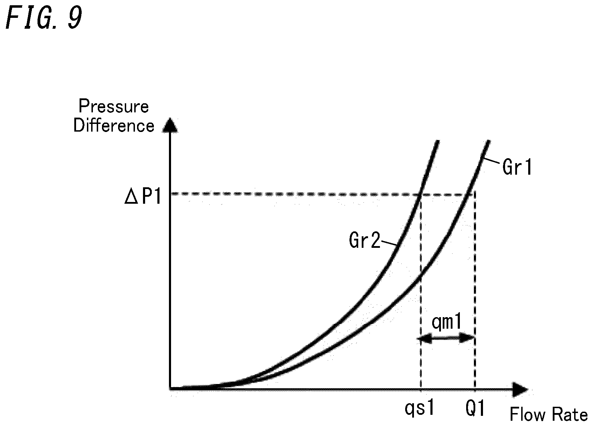

FIG. 1 illustrates a configuration for a flow rate measuring device as well as a perspective view illustrating the appearance of a flow channel part according to a first embodiment of the present disclosure. FIG. 2 is an exploded diagram of the flow channel part shown in FIG. 1. FIG. 3 is an exploded diagram illustrating a partial cross section of the flow channel part shown in FIG. 1. FIGS. 4A and 4B are a schematic cross-sectional view and an exploded diagram of the flow channel part taken along a plane A1-A2 shown in FIG. 1. FIGS. 5A and 5B are cross-sectional views of the flow channel part taken along a plane B1-B2 shown in FIG. 1 and a plane C1-C2 shown in FIG. 5A, respectively. FIG. 6 is an enlarged plan view of a constriction portion shown in portion G of FIG. 5A. FIG. 7 is a cross-sectional view of the constriction portion taken along a plane D1-D2 shown in FIG. 6. FIG. 8 illustrates a flow operation of the constriction portion. FIG. 9 is a graph showing a flow resistance curve of a fluid under measurement on a flow channel and a flow resistance curve of the fluid under measurement on a main flow channel.

In FIG. 1, the flow channel part 1 includes a fluid inlet port 2, through which a fluid under measurement (hereinafter simply referred to as a "fluid") flows in, and a fluid outlet port 3, through which the fluid under measurement flows out. In addition, the flow channel part 1 further includes a pressure sensor 4, a relative humidity sensor 5 (hereinafter simply referred to as a "humidity sensor"), temperature sensors 6, 7 provided at upstream and downstream points in the flowing direction, and ultrasonic transducers (flow rate measuring sensors) 8a, 8b arranged to face each other obliquely to the flowing direction at upstream and downstream points in the flowing direction.

In FIGS. 2, 3, 4A, and 4B to be referred to in the following description, the illustration of the pressure sensor 4, the humidity sensor 5, and the temperature sensors 6, 7 and illustration of their mounting holes, for example, are omitted.

As shown in FIGS. 4A and 4B, which are cross-sectional views taken along the plane A1-A2 shown in FIG. 1, a main flow channel 9 subjected to measurement is formed as a combination of a flow channel body 11 and a flow channel lid 12 by inserting a raised portion 12a of the flow channel lid 12 having a convex up shape into a recess side surface 11a of the flow channel body 11 with a concave down shape having an internal space 10 with a flat plate portion 12b of the flow channel lid 12 abutted onto the flow channel body 11. In such a state, the main flow channel 9 is formed as a space left between the tip of the raised portion 12a of the flow channel lid 12 and the internal space 10. In FIG. 3, the space corresponding to the main flow channel 9 is indicated by the one-dot chain.

Also, in FIG. 4A, a sub-flow channel 13 is a region surrounded with a groove 14 provided on the side surface of the raised portion 12a of the flow channel lid 12 and the recess side surface 11a of the flow channel body 11.

As shown in FIG. 4A, the main flow channel 9 on which the flow rate of the fluid under measurement is measured has a rectangular cross section, of which the longer sides are indicated by a width W and the shorter sides are indicated by a height H. A multilayer portion 16 is formed by dividing the main flow channel 9 into multiple layers with partition plates 15 which are arranged substantially horizontally. A stereoscopic appearance of the main flow channel 9 is as shown in FIG. 3.

As shown in FIG. 4A, the shorter-side height Ha of each of the multiple layers thus divided is less than the height H of the main flow channel 9 that has not been divided yet. Each of the multiple layers of the multilayer portion 16 comes to have a larger aspect ratio (W/Ha) than the main flow channel 9 that has not been divided yet. This improves the two-dimensional distribution of the flow, thus contributing to making the flow velocity distribution more uniform along the width of the main flow channel 9. In addition, making the respective shorter-side heights Ha of the multiple layers uniform also increases the degree of uniformity of the flow velocity distribution between the respective layers, thus enabling rectifying the flow as a whole.

As shown in FIGS. 3, 5A, and 5B, an upstream part of the sub-flow channel 13 is connected to an upstream opening 17, which is provided upstream of the main flow channel 9, and a downstream part of the sub-flow channel 13 is connected to a downstream opening 18, which is provide downstream of the main flow channel 9. As can be seen, the sub-flow channel 13 is located outside the main flow channel 9 and disposed downside in the gravity direction with respect to the main flow channel 9.

In this configuration, the sub-flow channel 13 is provided as a bypass flow channel for the main flow channel 9.

As shown in FIG. 5A, in the multilayer portion 16, the pair of ultrasonic transducers 8a, 8b are arranged to face each other diagonally to cause an ultrasonic wave to travel across the flow of the fluid under measurement in the flowing direction of the fluid under measurement. In addition, a part of the upstream ultrasonic transducer 8a and a part of the downstream ultrasonic transducer 8b are arranged to protrude into the multilayer portion 16.

In FIG. 5A, the dashed arrow M indicates an ultrasonic wave propagation path between the ultrasonic transducers 8a, 8b. In the following description, the ultrasonic wave propagation path indicated by the dashed arrow M will be hereinafter sometimes referred to as an "ultrasonic wave propagation path M." To allow the ultrasonic transducers 8a, 8b to protrude into the flow of the fluid under measurement, the partition plates 15 are provided with cutouts 19, thereby preventing the ultrasonic transducers 8a, 8b from abutting on any of the partition plates 15. In addition, in these cutouts 19, the gap d between the tip of the ultrasonic transducer 8a, 8b, serving as an ultrasonic wave transmitting/receiving portion, and each of the partition plates 15 has its dimension set to cause water drops in the fluid under measurement to fall down without being collected, sticking due to surface tension, and stagnating at the tip of the ultrasonic transducer 8a, 8b.

In addition, as shown in FIG. 1, various types of sensors such as the temperature sensors 6, 7, the pressure sensor 4, and the humidity sensor 5 are arranged on the flow channel part 1 to measure the temperature, pressure, and relative humidity of the fluid under measurement. These sensors, as well as the ultrasonic transducers 8a, 8b, are all mounted on the flow channel body 11.

As shown in FIG. 5A, the temperature sensors 6, 7 are provided at upstream and downstream points on the ultrasonic wave propagation path M on which the flow velocity is measured and are arranged such that their average value corresponds to a temperature at the middle point of the ultrasonic wave propagation path M. Meanwhile, the pressure sensor 4 is arranged at the middle point of the ultrasonic wave propagation path M to be adjacent to the outermost layer of the multilayer portion 16. However, the fluid is allowed to pass smoothly inside the main flow channel 9 due to the presence of the cutouts 19, thus allowing an average pressure to be detected. Furthermore, the humidity sensor 5 is disposed downstream of the multilayer portion 16. This arrangement is adopted to allow the humidity sensor 5 to make measurements at a point where the humidity sensor 5 does not adversely affect (e.g., disturb) the ultrasonic wave propagation path M and is affected much less significantly by water drops, for example.

Next, a configuration for a signal processing system will be described with reference to FIG. 1. A control unit 20 is electrically connected to the ultrasonic transducers 8a, 8b and is configured to transmit and receive a signal to/from the ultrasonic transducers 8a, 8b. In addition, a signal processing unit 21 is provided to receive a signal from the control unit 20 and perform flow rate calculation processing. This signal processing unit 21 transmits and receives signals to/from not only the control unit 20 but also the pressure sensor 4, the humidity sensor 5, and the temperature sensors 6, 7 as well. The signal processing unit 21 is electrically connected to these sensors to perform not only the flow rate calculation processing but also various types of arithmetic processing as well.

In this manner, a physical quantity measuring device 22 is formed by the flow channel part 1, the control unit 20, and the signal processing unit 21.

Next, the sub-flow channel 13 will be described in detail with reference to FIGS. 5A, 5B, 6, and 7. As shown in FIGS. 6 and 7, the height Hs and width Ws of the sub-flow channel 13 are set at such dimensions that allow the sub-flow channel 13 to have a volume which is large enough to hold the expected quantity of water and cause the incoming water to flow smoothly without stagnating.

In addition, the sub-flow channel 13 is arranged to be located under the sensor cutouts 19 of the partition plates 15 as shown in FIG. 5A. Thus, a connection portion 26 that allows the main flow channel 9 to connect with the sub-flow channel 13 is provided as shown in FIG. 7. The connection portion 26 is configured to allow the water drops running down through the cutouts 19 to enter the sub-flow channel 13 via the connection portion 26. As can be seen, the main flow channel 9 connects with the sub-flow channel 13 via the connection portion 26.

Furthermore, the sub-flow channel 13 is provided with constriction portions 27, of which the gap has a dimension s, and which are located upstream and downstream of the connection portion 26 within the region surrounded with the two-dot chain G in FIG. 6. This gap dimension s is set to prevent the bypass flow rate of the fluid passing through the sub-flow channel 13 (i.e., the flow rate that is not measured) from affecting the measurement error, regardless of whether any water drops are contained in the sub-flow channel 13 and is set so that the flow resistance is minimized with respect to the liquid if there are any droplets flowing, as will be described in detail later in the "1-2 Operation" section. As used herein, the "gap dimension" refers to the dimension (length) as measured from the bottom surface of the groove 14 to the recess side surface 11a of the flow channel body 11.

The configurations of the main flow channel 9, the sub-flow channel 13, the connection portion 26, and the constriction portions 27 have been described with respect to the region surrounded with the two-dot chain G shown in FIG. 5A. These members also have the same configurations in the region surrounded with the two-dot chain J shown in FIG. 5A.

As shown in FIG. 2, in this embodiment, the multilayer portion 16 has six layers formed by the five partition plates 15. Next, it will be described how to assemble these partition plates 15.

As shown in FIG. 2, the raised portion 12a of the flow channel lid 12 includes mounting portions 23 which are provided at upstream and downstream points, respectively, and each of which has a screw hole for assembling the partition plates 15. Each of the partition plates 15 has through holes (not shown) at respective corners corresponding to the mounting portions 23. With the partition plates 15 sequentially stacked one on top of another via spacers 24 to leave a gap Ha between each pair of partition plates 15 which are vertically adjacent to each other, the partition plates 15 are fixed by fastening screws inserted into the mounting portions 23.

The multilayer portion 16, formed by assembling the partition plates 15 in this manner, is mounted onto the flow channel lid 12 having the raised shape. The flow channel body 11 and the flow channel lid 12 are integrated together via a hermetically sealing rubber seal 25 to form the flow channel part 1.

[1-2. Operation]

Next, it will be described how the physical quantity measuring device 22 having such a configuration operates and works.

A procedure of assembling the flow channel part 1 will be described with reference to FIG. 3. First, the partition plates 15 are sequentially stacked one on top of another via the spacers 24 to leave a gap Ha between each pair of partition plates 15 as shown in FIG. 4A. Next, the partition plates 15 thus assembled is fixed to the mounting portions 23 with screws. A multilayer portion 16 formed by assembling the partition plates 15 in this manner is mounted onto the raised portion 12a of the flow channel lid 12. This flow channel lid 12 is capped with the flow channel body 11 having the concave down internal space 10 from over the flow channel lid 12, thereby assembling the flow channel part 1 with a hermetical seal ensured by pressing the rubber seal 25. In this case, the space where the multilayer portion 16 is disposed will serve as the main flow channel 9. In addition, referring to the cross-sectional view shown in FIG. 4A, the groove 14 provided on the side surface of the raised portion 12a of the flow channel lid 12 will be a region surrounded with the recess side surface 11a of the flow channel body 11 and will serve as the sub-flow channel 13.

The sub-flow channel 13 connects with the main flow channel 9 via the connection portion 26. The constriction portions 27 are respectively arranged upstream and downstream of the connection portion 26.

Next, it will be described with reference to FIGS. 3, 4A, 4B, 5A, and 5B how the fluid under measurement flows.

In FIG. 3, the fluid under measurement flows into the flow channel part 1 through the fluid inlet port 2 and flows out of the flow channel part 1 through the fluid outlet port 3. Specifically, the fluid under measurement flows through the flow channel part 1 in the following manner.

First, the flow F of the fluid under measurement which has flowed into the flow channel part 1 through the fluid inlet port 2 with the shape of a pipe is divided, at an inlet space CH1 with an increased cross-sectional area in the flowing direction, into a flow fs running toward the main flow channel 9 implemented as the multilayer portion 16 and a flow fm running toward the upstream opening 17. The flow fs running toward the main flow channel 9 passes through the multilayer portion 16 and then reaches an outlet space CH2.

Meanwhile, the flow fm running into the upstream opening 17 passes through the sub-flow channel 13 and then runs out through the downstream opening 18 to reach the outlet space CH2. These two flows fs, fm are confluent with each other in the outlet space CH2. Then, the confluent flow runs out of the flow channel part 1 through the fluid outlet port 3. The positional relationship between the main flow channel 9 and the sub-flow channel 13 is illustrated in FIG. 4A as a cross section perpendicular to the flowing direction and illustrated in FIG. 5B as a cross section parallel to the flowing direction.

As shown in FIG. 5A, the pair of ultrasonic transducers 8a, 8b are arranged with respect to the flow of the main flow channel 9 and the flow rate is measured by using these ultrasonic transducers 8a, 8b as will be described later. In addition, the pressure and temperature of the flow along the main flow channel 9 are measured by the pressure sensor 4 and the temperature sensors 6, 7, respectively. The humidity is measured by the humidity sensor 5, which is positioned downstream of the portion that measures the flow rate. As can be seen, the main flow channel 9 is a flow channel for measuring the physical quantity of the fluid under measurement. On the other hand, as can be seen from FIG. 5B, the sub-flow channel 13 is a flow channel provided as a bypass for the main flow channel 9 and is not used to measure any physical quantity.

Next, it will be described how droplets such as water and water drops behave when contained in the fluid under measurement.

As shown in FIGS. 3 and 5B, the flow channel part 1 is installed to have such an orientation that makes its horizontal or downstream part downward in the gravity direction. Under such a condition, part of the water and droplets (hereinafter referred to as a "bypass fluid") flowing in through the fluid inlet port 2 along with the fluid under measurement is caused to fall down by gravity at the inlet space CH1 with an increased cross-sectional area and flow into the sub-flow channel 13 through the upstream opening 17. Thereafter, the bypass fluid flows toward a downstream point inside the sub-flow channel 13 and then flows out into the outlet space CH2 through the downstream opening 18 provided at a downstream point. Then, the bypass fluid is confluent with the flow that has passed through the main flow channel and then flows out through the fluid outlet port 3. In this case, the bypass fluid that has flowed through the sub-flow channel 13 may be easily confluent with the flow along the main flow channel partly due to the attraction effect produced by the flow along the main flow channel. In this manner, the water and droplets that have flowed into the sub-flow channel 13 may be bypassed without causing any disruption to the physical quantity measurement on the main flow channel 9.

On the other hand, in FIGS. 3 and 5B, some droplets included in the water and droplets flowing in through the fluid inlet port 2 along with the fluid under measurement are not caused to fall down by gravity at the inlet space CH1 or flow into the sub-flow channel 13 through the upstream opening 17. Such droplets flow into the multilayer portion 16 of the main flow channel 9.

Some of those droplets are condensed and collected onto the partition plates 15 and flow as a flowing liquid on the surface of the partition plates 15 toward a downstream point. At this time, other small droplets which are not condensed or collected onto the partition plates 15 are partially absorbed into this flowing liquid, thus contributing to further reducing the water and droplets contained in the fluid under measurement.

Next, it will be described with reference to FIGS. 5A and 5B how to prevent the water and droplets flowing into the multilayer portion 16 from adhering to the ultrasonic transducers 8a, 8b.

By configuring the ultrasonic transducers 8a, 8b to protrude into the multilayer portion 16, it becomes easier for water and droplets that have flowed on the surface of the multilayer portion 16 to adhere to the ultrasonic transducers 8a, 8b. However, in this embodiment, the partition plates 15 of the multilayer portion 16 are provided with the cutouts 19 which leave a gap d between the ultrasonic transducers 8a, 8b. This gap d has such a dimension that prevents the water and droplets from being collected due to surface tension between the ultrasonic wave transmitting and receiving surfaces of the ultrasonic transducers 8a, 8b and the cutouts 19. This significantly reduces the likelihood of the water and droplets affecting the transmitting and receiving surfaces because the water and droplets are caused to fall down.

In this manner, the fluid under measurement flowing through the multilayer portion 16 serving as a measuring unit is allowed to have reduced water and droplets so significantly as to be ready to be measured even more suitably. In addition, this may also reduce the likelihood of the ultrasonic characteristics of the ultrasonic transducers 8a, 8b that transmit and receive ultrasonic waves being deteriorated due to collection of droplets onto their transmitting and receiving surfaces.

Next, it will be described with reference to FIG. 7 how such droplets behave.

First, part of the fluid under measurement flowing in through the fluid inlet port 2 is introduced into the sub-flow channel 13 through the upstream opening 17 provided upstream of the main flow channel 9. The water included in that part of the fluid under measurement flows as water drops Ra toward a downstream point. On the other hand, the droplets flowing into the multilayer portion 16 of the main flow channel 9 and the water condensed on the partition plates 15 are collected onto the cutouts 19 and caused, by gravity, to fall down as water drops Rb through the connection portion 26 to reach the sub-flow channel 13. In addition, the water that has adhered to the respective tips of the flow rate measuring sensors 8a, 8b is also caused by gravity to fall down as water drops Rb through the connection portion 26 to reach the sub-flow channel 13.

Such water drops Ra and Rb are confluent with each other to be water drops Rc. The water drops Rc flow through the sub-flow channel 13 toward a downstream point, pass through the downstream opening 18, and then flow out through the fluid outlet port 3.

In this case, as shown in FIGS. 6 and 7, the height Hs and width Ws of the sub-flow channel 13, along with its length in the flowing direction, are set at such dimensions that cause an expected quantity of incoming water to flow smoothly without stagnating and allow the sub-flow channel 13 to have a volume which is large enough to prevent the incoming water from overflowing. In addition, the gap dimension s of the constriction portions 27 is set to allow the bypass flow rate of the fluid passing through the sub-flow channel 13 (i.e., the flow rate of the fluid under measurement that is not measured) to have a flow resistance falling within a predetermined measurement error range when no water drops stagnate in the sub-flow channel 13.

FIG. 8 is a schematic top view illustrating the physical quantity measuring device 22, with the main flow channel, the sub-flow channel, and other members simplified to make the flow of the fluid under measurement and water drops more easily understandable, in order to illustrate the flow operation of the constriction portions.

In the model flow channel part 51 shown in FIG. 8, only the lower sub-flow channel 13 of the two sub-flow channels 13 shown in the upper and lower sides of FIG. 5A is illustrated as a sub-flow channel 54 for the sake of simplicity. In addition, in FIG. 8, the main flow channel 9 shown in FIG. 5A, for example, is illustrated as a main flow channel 53, the two constriction portions 27 shown in FIG. 5A are illustrated as constriction portions 59, 60, and the connection portion 26 shown in FIG. 5A is illustrated as a connection portion 58. Furthermore, in FIG. 8, the upstream opening 17 shown in FIG. 5B is illustrated as an upstream opening 55, and the downstream opening 18 shown in FIG. 5B is illustrated as a downstream opening 57. Also, even though the gap of the constriction portions 59, 60 is illustrated as extending downward in FIG. 8, the gap actually extends horizontally as shown in FIG. 6.

An inlet space 52 (corresponding to the region surrounded with the one-dot chain CH1 in FIG. 3) on an upstream side of the model flow channel part 51 is connected to the main flow channel 53 and the sub-flow channel 54. An upstream part of the sub-flow channel 54 is connected to the inlet space 52 via the upstream opening 55.

An outlet space 56 on a downstream side of the model flow channel part 51 is connected to the main flow channel 53 and the sub-flow channel 54. A downstream part of the sub-flow channel 54 is connected to the outlet space 56 (corresponding to the region surrounded with the one-dot chain CH2 in FIG. 3) via the downstream opening 57.

The sub-flow channel 54 connects to the main flow channel 53 in the middle through the connection portion 58. Also, the sub-flow channel 54 includes the constriction portions 59, 60 upstream and downstream, respectively, of the connection portion 58 thereof.

In such a configuration, the flow F of the fluid under measurement running into the model flow channel part 51 is divided, at the inlet space 52, into a flow fs running into the main flow channel 53 and a flow fm running into the sub-flow channel 54 through the upstream opening 55.

The flow fs of the fluid under measurement passing through the main flow channel 53 is subjected to physical quantity measurement of the flow by various sensors (not shown in FIG. 8) arranged along the main flow channel 53 and then reaches the outlet space 56. On the other hand, the flow fm running into the sub-flow channel 54 goes through the constriction portions 59, 60 to reach the outlet space 56.

Also, the main flow channel 53 and the sub-flow channel 54 are connected to each other via the connection portion 58. Thus, some flow may be produced in the connection portion 58 depending on the situation of the flow through the main flow channel 53 and the sub-flow channel 54.

In this manner, the flow of the fluid under measurement is produced in the sub-flow channel 54 as well but no physical quantity measurement is made on the sub-flow channel 54. That is to say, the flow of the fluid under measurement passing through the sub-flow channel 54 bypasses the main flow channel 53 and constitutes a measurement error. If this error were always constant with respect to the flow rate of the fluid under measurement through the main flow channel 53, then the error would only need to be corrected with its proportion taken into account. Nevertheless, the fluid under measurement as a target according to the present disclosure contains water drops (water). If the water drops flow into the sub-flow channel 54, then a pass cross-sectional area of the sub-flow channel 54 changes. As the case may be, the sub-flow channel 54 may be closed. Such an unexpected change in the flow rate of the bypass fluid (hereinafter referred to as a "bypass flow rate") flowing through the sub-flow channel 54 constitutes nothing but a factor that causes a measurement error.

To minimize such a measurement error, the difference in the flow rate (i.e., the difference in resistance) of the sub-flow channel 54 depending on whether there are any water drops may be minimized by making the fluid resistance of the sub-flow channel 54 as high as possible in a situation where there are no water drops. Thus, to create such a situation, the sub-flow channel 54 is provided with the constriction portions 59, 60.

The constriction portion 59 is provided to give resistance effect to the bypass flow of the fluid under measurement running from the sub-flow channel 54 toward the main flow channel 53 via the connection portion 58. On the other hand, the constriction portion 60 is provided to give resistance effect to the bypass flow of the fluid under measurement running from the main flow channel 53 toward the sub-flow channel 54 via the connection portion 58.

In this manner, by providing the constriction portions 59, 60 upstream and downstream, respectively, of the connection portion 58, it enables reducing, in any flow condition, a change in the flow rate (or resistance) of the fluid under measurement passing through the sub-flow channel 54 depending on whether there are any water drops, thus contributing to reducing the measurement error.

Next, the resistance effect of the sub-flow channel 54 will be described with reference to FIGS. 8 and 9. When water drops stagnate in the sub-flow channel 54, it becomes difficult for a flow to occur in the sub-flow channel 54, which means that the likelihood of causing an error is reduced. Therefore, to estimate the maximum error, it is advisable to consider the case where no water drops stagnate in the sub-flow channel 54.

In FIG. 8, the flow rate of the fluid flowing through the main flow channel 53 is measured on the main flow channel 53. In that case, the difference in pressure between a region preceding the main flow channel 53 and a region following the main flow channel 53 is defined as $\Delta P$. That is to say, the difference in pressure between two regions upstream and downstream, respectively, of the main flow channel 53 is defined as $\Delta P$. In other words, the pressure difference $\Delta P$ is the difference between the pressure at the upstream opening 17 and the pressure at the downstream opening 18. In that case, a flow is also produced inside the sub-flow channel 54 due to the pressure difference $\Delta P$.

In this case, if the flow rates of the flows F, fs, and fm of the fluid under measurement are Q, qs, and qm, respectively, then these flow rates satisfy the following equation (1):

$$Q = qs + qm \qquad (1).$$

Since the measurement error is the flow rate qm of the fluid flowing through the sub-flow channel 54, the following equation (2) for calculating the error flow rate qm is derived from equation (1):

$$qm = Q - qs \qquad (2).$$

In FIG. 9, the graph Gr1 represents a resistance curve of the flow F of the fluid under measurement that has flowed into the upstream opening 55 (17) (i.e., the flow F of the fluid under measurement along the flow channel extending from the upstream opening 55 (17) through the downstream opening 57 (18)). That is to say, the flow channel includes the upstream opening 55 (17), the downstream opening 57 (18), the main flow channel 53 (9), and the sub-flow channel 54 (13). On the other hand, the graph Gr2 shown in FIG. 9 represents a resistance curve of the flow fs of the fluid under measurement flowing through the main flow channel 53. In the graphs Gr1, Gr2 shown in FIG. 9, the abscissa indicates the flow rate, and the ordinate indicates the pressure difference.

If their flow rates at the pressure difference $\Delta P1$ are Q1, qs1, and qm1, respectively, then the error flow rate qm1 in such a situation is derived from the following equation (3) based on equation (2):

$$qm1 = Q1 - qs1 \qquad (3).$$

In this case, if the maximum error of the flow rate measurement is defined as t%, then the following inequality (4) is derived from equation (3):

$$qm1/Q1 < t/100 \qquad (4).$$

Thus, the flow channel resistance of the sub-flow channel 54 is determined such that its resistance curve satisfies this inequality (4). The resistance curve of a flow channel is substantially defined at a point where the flow channel has the smallest cross-sectional area. Thus, the resistance curve of the flow channel heavily depends on, for example, the cross-sectional area of the constriction portions 59, 60 of the sub-flow channel 54 shown in FIG. 8. In other words, the resistance curve of the flow channel heavily depends on the gap dimension s. For example, by changing the gap dimension s and obtaining the flow channel resistance of the sub-flow channel 54 through simulations, the gap dimension s at which the flow channel resistance of the sub-flow channel 54 satisfies the above inequality (4) is determined. Once the gap dimension s has been determined, the cross-sectional area of the constriction portions 59, 60 are also determined. The constriction portions 59, 60 are formed based on the cross-sectional area of the constriction portions 59, 60 thus determined. The cross section of the constriction portions 59, 60 may be rectangular or trapezoidal, whichever is appropriate. Alternatively, the cross section of the constriction portions 59, 60 may also have any other shape.

That is to say, the constriction portions 59, 60 (27) are formed based on the flow resistance that has been determined to satisfy the inequality (4).

Next, a measuring operation will be described. As shown in FIG. 4A, the main flow channel 9 with the rectangular cross section is divided by the partition plates 15 to form the multilayer portion 16 in which each of the multiple flow channels thus formed has an increased aspect ratio, thus attempting to rectify the flow. This allows a stabilized flow to be maintained in a broad flow rate range from a low flow rate to a high flow rate. In such a state, ultrasonic waves are transmitted and received through the ultrasonic wave propagation path M by the ultrasonic transducers 8a, 8b as shown in FIG. 5.

Such an ultrasonic wave transmission and reception operation is performed by the control unit 20 shown in FIG. 1. Based on the data thus acquired, the signal processing unit 21 may obtain the flow velocity V by the known inverse transit time difference method. The flow rate Q of the fluid under measurement may be calculated by multiplying the flow velocity V by the flow channel cross-sectional area S and further multiplying the product by a flow rate coefficient k for correction. That is to say, the flow rate Q may be calculated by the equation $Q = k \times V \times S$. At this time, using the pressure detected by the pressure sensor 4 and the temperature detected by the temperature sensors 6, 7, the signal processing unit 21 may convert the flow rate Q that has been calculated into a value in a standard state.

That is to say, the flow rate may be calculated by the known method based on the propagation time obtained by the pair of ultrasonic transducers 8a, 8b. Then, the flow rate in the standard state may be obtained by subjecting this value to temperature and pressure corrections.

Next, the error involved in this flow rate measurement will be described.

The sub-flow channel 54 has the maximum flow rate when no water drops are allowed to stagnate inside the sub-flow channel 54. Thus, calculating the error in such a state where no water drops stagnate allows the maximum error to be obtained. As described above, the resistance curve of the sub-flow channel 54 is determined to satisfy the inequality (4). This guarantees that the error is less than the predetermined value t%.

The hydrogen concentration of a fluid under measurement with humidity may be measured as an example of concentration measurement in the following procedure.

First, a water concentration Dw in a fluid is calculated using the relative humidity Tw provided by the relative humidity sensor 5, the temperature Td obtained as the average value of the temperatures detected by the temperature sensors 6, 7, and the pressure p provided by the pressure sensor 4. Next, the concentration of hydrogen with humidity may be obtained using the propagation time tdw from an upstream point to a downstream point provided by the ultrasonic transducers 8a, 8b, the propagation time tup from the downstream point to the upstream point, the temperature Td provided by the temperature sensor, and the water concentration Dw that has been calculated as described above.

[1-3. Advantages]

As can be seen from the foregoing description, a physical quantity measuring device according to the exemplary embodiment includes: a main flow channel 9; an upstream opening 17 provided upstream of the main flow channel 9; a downstream opening 18 provided downstream of the main flow channel 9; and a sub-flow channel 13 provided outside the main flow channel 9 to connect the upstream opening 17 and the downstream opening 18 to each other. The sub-flow channel 13 is configured to have some constriction portions 27 in a portion of it.

This enables, even if water drops are included in the fluid under measurement flowing into the physical quantity measuring device 22, reducing the difference in flow rate (i.e., difference in resistance) due to the difference in the pass cross-sectional area of the sub-flow channel depending on whether any water drops are contained or not. Consequently, this not only maintains sufficient accuracy when measuring the flow rate of a gas under a high-humidity environment but also ensures a path for water drops as well.

Also, as in the exemplary embodiment described above, the physical quantity measuring device 22 may be configured such that the flow rate measuring sensors 8a, 8b are arranged to protrude into a flow within the main flow channel 9, and it may include a connection portion 26 connecting with the sub-flow channel 13 from around notch 19 of partition plates 15. The constriction portions 27 of the sub-flow channel 13 may be provided before and after a portion (connecting portion) where the sub-flow channel 13 and the connection portion 26 are connected to each other. That is to say, the constriction portions 27 may be provided between upstream and downstream of the connecting portion where the sub-flow channel 13 and the connection portion 26 are connected to each other.

This allows, even if fine water drops flowed into the main flow channel 9 and collided with the flow rate measuring sensors 8a, 8b, those water drops to fall down through the connection portion 26, which connects with the sub-flow channel 13, into the sub-flow channel 13, thus preventing the water drops from accumulating on the flow rate measuring sensors 8a, 8b and the deterioration of the measurement accuracy due to the water drops adhesion. In addition, by providing the constriction portions 27 between upstream and downstream of the connecting portion where the sub-flow channel 13 and the connection portion 26 are connected to each other, it is possible to control the flow rate appropriately even at the part of the sub-flow channel 13 connected to the connection portion 26, thus ensuring the flow rate measurement accuracy in the main flow channel 9.

Furthermore, as in the exemplary embodiment described above, the main flow channel 9 of the physical quantity measuring device 22 may have a rectangular cross-sectional shape and the physical quantity measuring device 22 may include a multilayer portion 16 composed of partition plates 15 dividing the main flow channel 9 into multiple layers. In that case, the flow rate measuring sensors 8a, 8b are arranged in the multilayer portion 16.

This allows for the uniform distribution of flow velocity and flow rate throughout the entire flow channel. Therefore, even if the flow rate measuring sensors 8a, 8b do not cover the entire flow channel width, the flow rate to be measured highly accurately with good stability.

Furthermore, as in the exemplary embodiment described above, the physical quantity measuring device 22 may further include, on the main flow channel 9, temperature sensors 6, 7 for measuring a temperature of the fluid and a pressure sensor 4 for measuring a pressure of the fluid. The flow rate measuring sensors 8a, 8b, the temperature sensors 6, 7, and the pressure sensor 4 are electrically connected to a signal processing unit 21.

This allows the signal processing unit 21 to convert and measure an accurate flow rate in the standard state of the fluid by receiving a flow rate signal of the fluid under measurement from the flow rate measuring sensors 8a, 8b, an accurate temperature of the fluid under measurement from the temperature sensors 6, 7, and an accurate pressure of the fluid under measurement from the pressure sensor 4.

Furthermore, as in the exemplary embodiment described above, the flow rate measuring sensors 8a, 8b are a pair of ultrasonic transducers 8a, 8b, and the physical quantity measuring device 22 may include a humidity sensor 5 for measuring the humidity of the fluid. The flow rate measuring sensors 8a, 8b, the temperature sensors 6, 7, the pressure sensor 4, and the humidity sensor 5 may be electrically connected to the signal processing unit 21.

This allows the flow velocity and flow rate to be determined by the known inverse transit time difference method, based on the ultrasonic wave propagation times from the pair of ultrasonic transducers 8a, 8b for transmitting and receiving the ultrasonic waves. In addition, this also enables calculating the concentration of components included in the fluid, excluding water vapor, by a known method based on the speed of sound obtained using the ultrasonic wave propagation times from the pair of ultrasonic transducers 8a, 8b for transmitting and receiving the ultrasonic waves, the measured values obtained by the temperature sensors 6, 7, and the measured value obtained by the humidity sensor 5.

In this manner, the flow rate of a fluid and the concentration of components included in the fluid may be measured by preventing the intrusion of water drops into the flow rate measuring unit (flow rate measuring sensors 8a, 8b).

The first embodiment has been described as an exemplary embodiment of the present disclosure. Note that the first embodiment described above is only an example of the present disclosure and should not be construed as limiting. Rather, the exemplary embodiment may be readily modified, replaced, provided with some additional components, or partially omitted without departing from the scope of the present disclosure. Alternatively, a new embodiment may be created by differently combining the respective constituent elements that have been described for the first embodiment.

Thus, some other embodiments will be described as examples.

In the first embodiment described above, the multilayer portion 16 is supposed to install the partition plates 15 substantially horizontally. However, this is only an example and should not be construed as limiting. Alternatively, the partition plates 15 may also be installed vertically. This allows some of the water drops formed by the collision to run down the partition plates more smoothly.

In the first embodiment described above, the pair of temperature sensors 6, 7 are provided upstream and downstream, respectively, of the flow channel part 1. If the fluid has a less steep temperature gradient, only one temperature sensor may suffice. In that case, the cost may be cut down.

In the first embodiment described above, the pressure sensor 4 is supposed to be disposed over the outer layer side of the multilayer portion 16 in the height H direction. Alternatively, the pressure sensor 4 may also be disposed in the width W direction to face multiple central layers of the multilayer portion 16. In particular, arranging the pressure sensor 4 on the signal processing unit 21 side enables downsizing the signal processing unit 21 and cutting down the cost thereof by, for example, providing the pressure sensor 4 as an integral part of a control board serving as the signal processing unit 21 and/or simplifying the interconnecting wiring.

In the first embodiment described above, the physical quantity measuring device 22 is configured to use the pair of ultrasonic transducers 8a, 8b as an exemplary flow rate measuring unit for measuring the flow rate. However, this configuration is only an example and should not be construed as limiting. Alternatively, the physical quantity measuring device 22 may also use a thermal sensor as an exemplary flow rate measuring unit. In that case, there is no need to provide a pair of thermal sensors. Thus, a thermal sensor only needs to be disposed instead of the ultrasonic transducer 8a shown in FIG. 1, for example.

In the first embodiment described above, the pair of ultrasonic transducers 8a, 8b and the humidity sensor are supposed to be used as an exemplary means for measuring the concentration. Alternatively, a concentration sensor which may measure the concentration of a particular gas may also be adopted. In that case, the concentration sensor has only to be provided instead of the pair of ultrasonic transducers 8a, 8b or the thermal sensor serving as the flow rate measuring sensor and the humidity sensor.

Furthermore, in the exemplary embodiment described above, the multilayer portion 16 is formed by dividing the main flow channel 9 into multiple layers using the partition plates 15. Naturally, the main flow channel 9 may have a single layer with no partition plates 15 used.

In the first embodiment described above, the entry of water drops into the fluid being measured has been described as a typical event. However, this is only an example and should not be construed as limiting. The same or similar advantages would be achieved even if not water drops but any other droplets entered the fluid being measured.

Note that the embodiments described above are only examples of the present disclosure and should not be construed as limiting. Rather, each of those embodiments may be readily modified, replaced, provided with some additional components, or partially omitted in various manners without departing from the scope of the appended claims and their equivalents.

(Recapitulation)

As can be seen from the foregoing description, a physical quantity measuring device (22) according to a first aspect includes a flow channel body (11), a flow rate measuring unit (such as ultrasonic transducers 8a, 8b), a signal processing unit (21), an upstream opening (17), a downstream opening (18), and a sub-flow channel (13). The flow channel body (11) includes a main flow channel (9). The flow rate measuring unit is provided for the main flow channel (9). The signal processing unit (21) receives a signal from the flow rate measuring unit to measure a flow rate of a fluid. The upstream opening (17) is provided upstream of the main flow channel (9). The downstream opening (18) is provided downstream of the main flow channel (9). The sub-flow channel (13) is provided outside the main flow channel (9) to connect the upstream opening (17) and the downstream opening (18) to each other. The sub-flow channel (13) has a constriction portion (27) in the flow channel that reduces a cross-sectional area of the flow.

This aspect enables, even if condensation droplets are contained in a fluid (such as a gas), not only measuring either the flow rate or concentration of the gas accurately in a high-humidity environment but also ensuring a path for the condensation droplets as well.

In a physical quantity measuring device (22) according to a second aspect as in the first aspect, the flow rate measuring unit is arranged to protrude into a flow within the main flow channel (9) and includes a connection portion (26) connecting with the sub-flow channel (13) from around a protruding portion of the flow channel measuring unit. The constriction portion (27) is arranged before and after a portion where the sub-flow channel (13) and the connection portion (26) are connected to each other.

This aspect enables giving a resistance effect to the fluid under measurement which flows through a bypass from the sub-flow channel (13) toward the main flow channel (9) via the connection portion (26). In addition, this aspect also enables giving a resistance effect to the fluid under measurement which flows through a bypass from the main flow channel (9) toward the sub-flow channel (13) via the connection portion (26).

In a physical quantity measuring device (22) according to a third aspect, as in the first or second aspect, the main flow channel (9) has a rectangular cross-sectional shape. The physical quantity measuring device (22) includes a multilayer portion (16) composed of partition plates (15) dividing the main flow channel (9) into multiple layers. The flow rate measuring unit is disposed in the multilayer portion (16).

This aspect enables improving the two-dimensional distribution of the fluid flowing through the main flow channel (9), thereby contributing to making the flow velocity distribution more uniform on the main flow channel (9).

A physical quantity measuring device (22) according to a fourth aspect, as in the first to third aspects, further includes, on the main flow channel (9), a temperature sensor (6, 7) for measuring a temperature of the fluid and a pressure sensor (4) for measuring a pressure of the fluid. The signal processing unit (21) measures a flow rate of the fluid based on signals that the signal processing unit (21) has received from the flow rate measuring unit, the temperature sensor (6, 7), and the pressure sensor (4), respectively.

This aspect enables, even if condensation droplets are contained in a fluid (such as a gas), measuring the flow rate of the gas in a standard state accurately in a high-humidity environment.

A physical quantity measuring device (22) according to a fifth aspect, as in the fourth aspect, further includes a humidity sensor (5) for measuring a humidity of the fluid. The flow rate measuring unit is a pair of ultrasonic transducers (8a, 8b). The signal processing unit measures a flow rate and a component concentration of the fluid based on signals that the signal processing unit has received from the flow rate measuring unit, the temperature sensor (6, 7), the pressure sensor (4), and the humidity sensor (5), respectively.

This aspect enables, even if condensation droplets are contained in a fluid (such as a gas), measuring the flow rate and concentration of the gas accurately in a high-humidity environment.

In a physical quantity measuring device (22) according to a sixth aspect, as in any one of the first to fifth aspects, the constriction portion (27) is formed based on a flow resistance of the sub-flow channel (13). The flow resistance of the sub-flow channel (13) is defined to make, when a fluid containing no water flows through a flow channel running from the upstream opening (17) through the downstream opening (18), a quotient calculated by dividing a difference between a first flow rate (Q) and a second flow rate (qs) by the first flow rate less than a predetermined value (t). The first flow rate (Q) is a flow rate of the fluid flowing through the flow channel. The second flow rate (qs) is a flow rate of the fluid flowing through the main flow channel (9). The fluid flows through the flow channel and the main flow channel (9) at a specified pressure difference ($\Delta P$).

This aspect enables the error of flow rate measurement to be kept below a predetermined value depending on whether water drops contained are or not, thus enabling measuring the flow rate and concentration of the gas highly accurately.

**Industrial Applicability**

The present disclosure may reduce, even if water drops are contained in a fluid (such as a gas) flowing in, not only a difference caused in the cross-sectional area, through which the gas passes, but also the variation in the measured flow rate, depending on whether the condensation droplets are contained or not. Thus, the present disclosure is effectively applicable to a physical quantity measuring device which needs to not only measure the flow rate and concentration of the gas with good stability in a high-humidity environment but also ensure a path for the water drops. Specifically, the present disclosure is applicable to not just a device with both a flowmeter and a component concentration measuring instrument, but also a device with only a flowmeter or a device with only a component concentration measuring instrument as well.

**Reference Signs List**

| | |
|---|---|
| 1 | Flow Channel Part |
| 2 | Fluid Inlet Port |
| 3 | Fluid Outlet Port |
| 4 | Pressure Sensor |
| 5 | Relatively Humidity Sensor (Humidity Sensor) |
| 6 | Temperature Sensor |
| 7 | Temperature Sensor |
| 8a | Ultrasonic transducer (Flow Rate Measuring Sensor, Flow Rate Measuring Unit) |
| 8b | Ultrasonic transducer (Flow Rate Measuring Sensor, Flow Rate Measuring Unit) |
| 9 | Main Flow Channel |
| 10 | Internal Space |
| 11 | Flow Channel Body |
| 11a | Recess Side Surface |
| 12 | Flow Channel Lid |
| 12a | Raised Portion |
| 12b | Flat Plate Portion |
| 13 | Sub-Flow Channel |
| 14 | Groove |
| 15 | Partition Plate |
| 16 | Multilayer Portion |
| 17 | Upstream Opening |
| 18 | Downstream Opening |
| 19 | Cutout |
| 20 | Control Unit |
| 21 | Signal Processing Unit |
| 22 | Physical Quantity Measuring Device |
| 23 | Mounting Portion |
| 24 | Spacer |
| 25 | Rubber Seal |
| 26 | Connection Portion |
| 27 | Constriction Portion |
| 51 | Model Flow Channel Part |
| 52 | Inlet Space |
| 53 | Main Flow Channel |
| 54 | Sub-Flow Channel |
| 55 | Upstream Opening |
| 56 | Outlet Space |
| 57 | Downstream Opening |
| 58 | Connection Portion |
| 59 | Constriction Portion |
| 60 | Constriction Portion |
| CH1 | Inlet Space |
| CH2 | Outlet Space |

**Claims**

1. A physical quantity measuring device comprising:

   a flow channel body including a main flow channel;
   a flow rate measuring unit provided for the main flow channel;
   a signal processing unit configured to receive a signal from the flow rate measuring unit to measure a flow rate of a fluid;
   an upstream opening provided upstream of the main flow channel;
   a downstream opening provided downstream of the main flow channel; and
   a sub-flow channel provided outside the main flow channel to connect the upstream opening and the downstream opening to each other,
   the sub-flow channel having a constriction portion that reduces a cross-sectional area of the flow channel.

2. The physical quantity measuring device of claim 1, wherein

   the flow rate measuring unit is arranged to protrude into a flow within the main flow channel and includes a connection portion connecting with the sub-flow channel from around a protruding portion of the flow channel measuring unit, and the constriction portion is arranged before and after a portion where the sub-flow channel and the connection portion are connected to each other.

3. The physical quantity measuring device of claim 1 or 2, wherein

   the main flow channel has a rectangular cross-sectional shape,
   the physical quantity measuring device includes a multilayer portion formed by partition plates dividing the main flow channel into multiple layers, and
   the flow rate measuring unit is disposed in the multilayer portion.

4. The physical quantity measuring device of any one of claims 1 to 3, comprising, on the main flow channel, a temperature sensor configured to measure a temperature of the fluid, and a pressure sensor configured to measure a pressure of the fluid, wherein the signal processing unit is configured to measure a flow rate of the fluid based on signals that the signal processing unit has received from the flow rate measuring unit, the temperature sensor, and the pressure sensor, respectively.

5. The physical quantity measuring device of claim 4, further comprising a humidity sensor configured to measure a humidity of the fluid, wherein

the flow rate measuring unit is a pair of ultrasonic transducers, and
the signal processing unit is configured to measure a flow rate and a component concentration of the fluid based on not only signals that the signal processing unit has received from the flow rate measuring unit, the temperature sensor, the pressure sensor, and the humidity sensor, respectively.

6. The physical quantity measuring device of any one of claims 1 to 5, wherein

the constriction portion is formed based on a flow resistance of the sub-flow channel, and
the flow resistance of the sub-flow channel is defined to make, when a fluid containing no water flows through a flow channel running from the upstream opening through the downstream opening, a quotient calculated by dividing a difference between a first flow rate and a second flow rate by the first flow rate less than a predetermined value, the first flow rate being a flow rate of the fluid flowing through the flow channel, the second flow rate being a flow rate of the fluid flowing through the main flow channel the fluid flowing through the flow channel and the main flow channel at a specified pressure difference.

FIG. 1

FIG. 2

# FIG. 3

*FIG. 4 A*

*FIG. 4 B*

FIG. 5 A

FIG. 5 B

*FIG. 6*

FIG. 7

FIG. 8

FIG. 9

FIG. 10

100

**EP 4 538 653 A1**

<table>
<tr><td colspan="2" align="center"><b>INTERNATIONAL SEARCH REPORT</b></td><td colspan="2">International application No.<br><br><b>PCT/JP2023/021057</b></td></tr>
</table>

**A.    CLASSIFICATION OF SUBJECT MATTER**

*G01F 1/66*(2022.01)i; *G01N 29/024*(2006.01)i; *G01N 29/32*(2006.01)i
FI:    G01F1/66 101; G01N29/024; G01N29/32

According to International Patent Classification (IPC) or to both national classification and IPC

**B.    FIELDS SEARCHED**

Minimum documentation searched (classification system followed by classification symbols)
G01F1/66-1/667

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2022-025751 A (PANASONIC INTELLECTUAL PROPERTY MANAGEMENT CO., LTD.) 10 February 2022 (2022-02-10)<br>    paragraphs [0017]-[0043], fig. 1-4 | 1-6 |
| Y | JP 2007-240159 A (NISSAN MOTOR CO LTD) 20 September 2007 (2007-09-20)<br>    paragraphs [0033], [0035], fig. 11(a), 11(c) | 1-6 |
| A | JP 2004-144563 A (NISSAN MOTOR CO LTD) 20 May 2004 (2004-05-20)<br>    paragraphs [0039]-[0043], fig. 6 | 1-6 |

☐ Further documents are listed in the continuation of Box C.       ☑ See patent family annex.

| | | |
|---|---|---|
| *        Special categories of cited documents: | "T" | later document published after the international filing date or priority date and not in conflict with the application but cited to understand the principle or theory underlying the invention |
| "A"    document defining the general state of the art which is not considered to be of particular relevance | | |
| "E"    earlier application or patent but published on or after the international filing date | "X" | document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"    document referring to an oral disclosure, use, exhibition or other means | | |
| "P"    document published prior to the international filing date but later than the priority date claimed | "&" | document member of the same patent family |

| Date of the actual completion of the international search | Date of mailing of the international search report |
|---|---|
| **30 June 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 538 653 A1**

INTERNATIONAL SEARCH REPORT
Information on patent family members

International application No.

**PCT/JP2023/021057**

| Patent document cited in search report | | | Publication date (day/month/year) | Patent family member(s) | | | Publication date (day/month/year) |
|---|---|---|---|---|---|---|---|
| JP | 2022-025751 | A | 10 February 2022 | WO | 2022/024821 | A1 | |
| JP | 2007-240159 | A | 20 September 2007 | (Family: none) | | | |
| JP | 2004-144563 | A | 20 May 2004 | (Family: none) | | | |

Form PCT/ISA/210 (patent family annex) (January 2015)

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022025751 A